# EUROPEAN PATENT APPLICATION

(11) **EP 1 515 557 A1**
(43) Date of publication of application: **16.03.2005**
(21) Application number: 04021412.4
(22) Date of filing: 09.09.2004
(51) Int. Cl.: H04N 7/18, H04N 5/232

(54) **Monitoring image recording apparatus**

(30) Priority: 12.09.2003 JP 2003321376
(71) Applicant: MATSUSHITA ELECTRIC INDUSTRIAL CO., LTD., Kadoma-shi, Osaka 571-8501 (JP)
(72) Inventor: Tagawa, Haruo, Tokyo 173-0002 (JP); Hinode, Yoshihiro, Sagamihara-shi Kanagawa 229-0031 (JP); Fujiwara, Keiichi, Sagamihara-shi Kangawa 228-0803 (JP)
(74) Representative: Holmes, Miles

(57) **Abstract**

It is an object to provide a monitoring image recording apparatus capable of carrying out multi-screen monitoring through a live image by means of a plurality of cameras even if an auxiliary power switch is turned OFF. There are provided an image data compressing and extending portion 104 for compressing and extending monitoring image data, an HDD 107 for recording the image data thus compressed, and a control portion 130 for controlling the image data compressing and extending portion 104 and the HDD 107, the control portion 130 has an HDD power supply control portion 200 for controlling the supply of a power to the HDD 107.

## Description

### Background of the Invention

### Field of the Invention

The present invention relates to a monitoring image recording apparatus which records image data for monitoring.

### Description of the Related Art

There has been a conventional monitoring image recording apparatus which first ends access to a hard disk and brings the apparatus from an operation state into such a standby state that a microcomputer portion in a main board is mainly operated, thereby turning OFF the AC power supply of the apparatus when the power supply of the apparatus is to be turned OFF in order to prevent the data destruction of a hard disk drive (hereinafter referred to as an HDD) to be recording means.

For example, there has been known a monitoring image recording apparatus comprising a main power switch for turning ON or OFF the AC power supply of the monitoring image recording apparatus, and a power switch (described as an auxiliary power switch in the invention) for switching a standby state and an operation state of the apparatus (Patent Document 1: JP-A-2001-84063 Publication (see Pages 3 and 4, Fig. 1)).

In many cases, moreover, the monitoring image recording apparatus is used by connecting a plurality of cameras thereto to carry out multi-screen monitoring utilizing a plurality of camera live images for a monitor, to perform a camera control such as a zoom, a pan and a tilt or to give a notice of the abnormality of the apparatus in which a camera video signal during monitoring is interrupted.

In the conventional monitoring image recording apparatus, however, when the apparatus is not used, an auxiliary power switch is turned OFF with a main power switch in an ON state so that the apparatus is brought from an operation state into a standby state. For this reason, the supply of a power for a microcomputer portion is maintained and power supplies for a camera video display portion, a camera control circuit, a communicating portion and a hard disk drive which are the main parts of the apparatus are OFF. In the case in which the hard disk drive of the apparatus is not used but the microcomputer portion, the camera video display portion, the camera control circuit and the communicating portion are used, however, there is a problem in that it is impossible to carry out multi-screen monitoring through a live image to be the important function of the monitoring image recording apparatus using a plurality of cameras, to perform a camera control and to give a notice of the abnormality of the apparatus in which a camera video signal is interrupted because the auxiliary power switch is OFF.

### Summary of the Invention

The invention has been made to solve such a conventional problem and has an object to provide a monitoring image recording apparatus capable of carrying out multi-screen monitoring through a live image to be the important function of the apparatus even if an auxiliary power switch is turned OFF.

The invention provides a monitoring image recording apparatus comprising image data compressing means for compressing monitoring image data, recording means for recording the image data compressed by the image data compressing means, and control means for controlling the image data compressing means and the recording means, wherein the control means has a recording means power control portion for controlling a supply of a power to the recording means.

By this structure, even if an auxiliary power switch is turned OFF, it is possible to carry out multi-screen monitoring through a live image to be the important function of the monitoring image recording apparatus using a plurality of cameras, to fulfill a camera control function and to give a notice of the abnormality of the apparatus in which a camera video signal is interrupted.

For example, it is possible to confirm the operation of a camera video and monitor display function in a state in which the power supply of the recording means that is apt to break down due to a vibrating shock in the installation of the monitoring image recording apparatus is turned OFF.

Moreover, the monitoring image recording apparatus according to the invention has such a structure that the recording means is a hard disk drive.

By this structure, it is possible to confirm the operation of a camera video and monitor display function in a state in which the power supply of an HDD that is apt to break down due to a vibrating shock in the installation of the monitoring image recording apparatus is turned OFF.

Furthermore, the monitoring image recording apparatus according to the invention has such a structure that the recording means power control portion has power supply time setting means for supplying a power to the recording means after a predetermined time since a power of the monitoring image recording apparatus is supplied.

By this structure, it is possible to automatically start an HDD and to begin the application of picture recording after confirming the connection of equipment in the installation of the monitoring image recording apparatus and then providing the same apparatus on a rack, for example. Thus, it is possible to avoid an application error caused by the fact that a person forgets an operation.

In addition, the monitoring image recording apparatus according to the invention has such a structure that the recording means power control portion has power supply number counting means for counting the number of times at which a power is supplied to the monitoring image recording apparatus.

By this structure, it is possible to set a time required for supplying a power to the recording means according to the number of ON/OFF operations of the power supply for the monitoring image recording apparatus. Consequently, a time in which picture recording cannot be carried out can be caused to be the shortest in an automatic reset after a sudden service interruption.

Moreover, the monitoring image recording apparatus according to the invention has such a structure that the recording means power control portion includes operation stop time calculating means for calculating a time required to stop an operation of the recording means when a supply of a power to the recording means is stopped.

By this structure, also in the case in which the recording means itself is to be removed in order to take image data recorded in the recording means to an outside, it is possible to know a time required for ending the operation of the recording means. Thus, it is possible to remove the recording means safely.

Furthermore, the monitoring image recording apparatus according to the invention has such a structure that there is further provided external recording means for recording the image data on an outside of the monitoring image recording apparatus, the recording means power control portion having power supply control means of external recording means for controlling a supply of a power to the external recording means.

By this structure, recording in the external recording means can be carried out, and furthermore, the recording means can be installed, inspected and repaired.

The invention can provide a monitoring image recording apparatus having such an advantage that the recording means power control portion capable of controlling the supply of a power to the recording means is provided and it is thus possible to carry out multi-screen monitoring through a live image to be the important function of the monitoring image recording apparatus using a plurality of cameras, to fulfill a camera control function and to give a notice of the abnormality of the apparatus in which a camera video signal is interrupted even if an auxiliary power switch is turned OFF.

### Brief Description of the Drawings

Fig. 1 is a block diagram showing a monitoring image recording apparatus according to a first embodiment of the invention; and
Fig. 2 is a block diagram showing a monitoring image recording apparatus according to a second embodiment of the invention.

In the drawings, the reference numerals refers to followings:
101a to 101n camera;
102 input camera selecting portion;
103 image data input portion;
104 image data compressing and extending portion;
105 data flow control portion;
106 data I/F portion;
107,304 HDD;
120 display control portion;
121 monitor television;
130,305 control portion (CPU);
132 main power switch;
133 power unit;
134 HDD power control portion;
135,307 auxiliary power switch;
200,306 HDD power supply control portion;
201 power supply time setting portion;
202 supply number deciding portion;
203 operation end time calculating portion;
301 USB-HUB;
302a to 302n USB port;
303 USB-IDE converting portion;
308 external HDD power supply control portion;

### Detailed Description of the Preferred Embodiments

A monitoring image recording apparatus according to an embodiment of the invention will be described below with reference to the drawings.

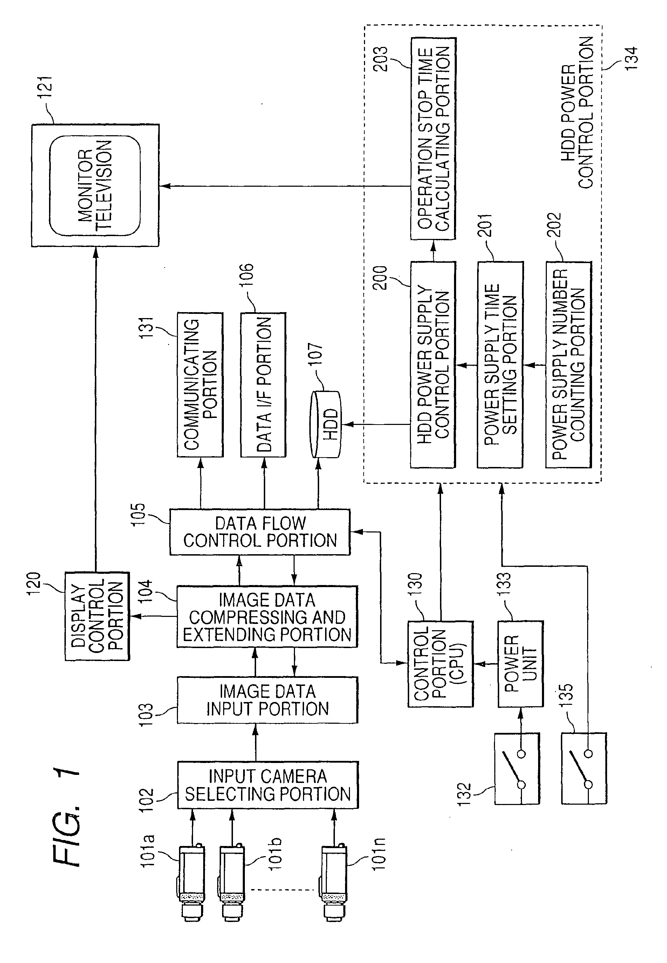

Fig. 1 is a block diagram showing a monitoring image recording apparatus according to a first embodiment of the invention.

As shown in Fig. 1, the monitoring image recording apparatus according to the embodiment of the invention comprises a recording system circuit, a reproducing system circuit, and a control circuit for controlling the recording system circuit and the reproducing system circuit. The recording system circuit includes a plurality of cameras 101a to 101n to be image pick-up means, an input camera selecting portion 102 for selecting one of the cameras, an image data input portion 103 for inputting the video of the camera thus selected and adding a time and other incidental information, an image data compressing and extending portion 104 having the function of compressing image data to have a suitable size for recording and communication and extending the compressed data into original image data, a data flow control portion 105 for controlling to read/write the compressed data from/to a recording medium and controlling a transmission to a communicating portion, a data I/F portion 106 for carrying out an interface to read/write data from/to an auxiliary recording medium which is not shown, and an HDD 107 to be recording means acting as a main recording medium. A video camera for monitoring and a very high sensitivity video camera which is suitable for photographing at night are used for the cameras 101a to 101n.

Moreover, the reproducing system circuit includes the image data compressing and extending portion 104 connected to the data flow control portion 105, a display control portion 120 for controlling the display of a live image and a reproducing image, and a monitor television 121 to be image display means.

Furthermore, the control circuit includes a control portion 130 for controlling the whole apparatus, a communicating portion 131 for communicating with external equipment, a main power switch 132 for turning ON or OFF the AC power supply of the whole apparatus, a power unit 133 for carrying out a conversion from the AC power supply to a DC power supply of +5V and +12V, an HDD power control portion 134 to be a recording means power control portion for turning ON or OFF the supply of a power to the HDD 107, and an auxiliary power switch 135 capable of turning ON or OFF the supply of the power to the HDD 107.

The HDD power control portion 134 includes an HDD power supply control portion 200 for turning ON or OFF the supply of the power to the HDD 107, a power supply time setting portion 201 for supplying the power to the HDD 107 after the passage of a predetermined time since the main power switch 132 is turned ON, a power supply number counting portion 202 for counting the number of times at which the main power switch 132 is turned ON or OFF after the installation of the apparatus, and an operation stop time calculating portion 203 for calculating a time required for completely stopping the rotation of a hard disk after the HDD power supply control portion 200 stops the supply of the power to the HDD 107 and carrying out a display on the monitor television 121.

In addition, the monitoring image recording apparatus comprises an operating portion (not shown) which gives a predetermined recording or reproducing command.

Next, the operation of the monitoring image recording apparatus will be described.

Video signals photographed by the cameras 101a to 101n are input to the input camera selecting portion 102 so that a camera intended for picture recording and a camera intended for a live display are selected. The video signal of the selected camera is input to the image data input portion 103, and the video signal is input and a time, a title and other incidental information are added to the video signal. Furthermore, the same signal is input to the image data compressing and extending portion 104 and is thus compressed, and is then written to the HDD 107 by the data flow control portion 105 or is transmitted to a remote place through the network communicating portion 131.

While a Joint Photographic Experts Group (JPEG) method for static image compression and a Moving Picture Experts Group (MPEG) method for dynamic image compression are employed as a compressing method in the image data compressing and extending portion 104, these compressing methods are not restricted. In Fig. 1, moreover, the display control portion 120 is connected to the image data compressing and extending portion 104. In the case in which a live image is to be displayed, image data are displayed without compression.

In the case in which monitoring image data are to be reproduced, moreover, compressed data are read from an external HDD (not shown) which is connected through the HDD 107 and the communicating portion 131 and is provided additionally on the outside of the monitoring image recording apparatus, and are extended by the image data compressing and extending portion 104 and are displayed on the monitor television 121 through the display control portion 120.

The control portion 130 can control the HDD power supply control portion 200. Therefore, the supply of a power to the HDD can be turned ON/OFF in an optional timing if necessary.

The HDD power control portion 134 can be turned ON or OFF the supply of the power to the HDD 107 while supplying a power to the camera video display portion, the camera control circuit and the communicating portion which are the main functions of the apparatus. Therefore, it is possible to carry out multi-screen monitoring for displaying a plurality of monitoring images from videos sent from the cameras 101a to 101n in live images over a multi-screen and a camera control such as transverse and vertical pan, tilt and zoom operations to the video cameras 101a to 101n, and to give a notice of the abnormality of the apparatus in which a camera video signal is interrupted irrespective of a normal monitoring mode. In other words, it is possible to carry out operations other than picture recording or reproduction which requires access to the HDD 107.

In general, the HDD is sensitive to a vibrating shock received from an outside during an operation (the rotation of the disk) and a failure is thus apt to be caused. Even if the main power switch 132 is turned ON so that the control portion 130 starts an operation, the control portion 130 is operated so as not to turn ON the supply of the power to the HDD 107 until a preset time passes through the power supply period setting portion 201. Even if the vibrating shock is applied to the HDD 107 when the monitoring image recording apparatus is to be installed, consequently, the failure of the HDD 107 can be avoided.

When a time to be set by the power supply period setting portion 201 is changed, moreover, the power supply of the main power switch 132 is turned OFF due to a service interruption after the installation of the monitoring image recording apparatus. When the service interruption is recovered and the ON operation is then carried out again, a picture recording start timing can be adapted to electronic equipment such as another video camera. Thus, it is possible to avoid unnecessary picture recording for a channel having no camera video and the image of a camera which is being initialized.

Furthermore, a large power is required for starting the HDD 107. In a monitoring image recording system using a plurality of apparatuses, therefore, it is also possible to reduce a system power consumption when the monitoring image recording apparatuses are reset all together after a service interruption by shifting the starting time of the HDD 107 in each of the apparatuses.

On the other hand, a time is set to be zero by the power supply period setting portion 201 in some cases. This is useful when the number of times at which the power supply of the main power switch 132 is turned ON/OFF is counted after the installation of the monitoring image recording apparatus and a predetermined value is exceeded. By setting the time to be zero second at this time, it is possible to set the shortest time from the ON operation of the power supply of the main power switch 132 to the start of picture recording, thereby minimizing a failure to catch an important scene. In the case in which a stop state is set because the residual recording capacity of the HDD 107 in the monitoring image recording apparatus is gone, it is possible to eliminate a situation in which monitoring image data cannot be recorded by carrying out picture recording over an external HDD (not shown) provided on the outside of the apparatus through the control portion 130.

The control portion 130 displays, on the monitor television 121, a time required from the stoppage of the supply of the power to the HDD 107 by the HDD power supply control portion 200 to the complete stoppage of the rotation of the hard disk in the HDD 107 in an inspection or a maintenance. Consequently, it is possible to give a notice to a user. The reason is that it is necessary to prevent troubles to cause a failure due to the erroneous application of a shock to the HDD 107 during the rotation of the HDD 107.

As described above, according to the monitoring image recording apparatus in accordance with the first embodiment of the invention, the HDD power control portion 134 for turning ON or OFF the supply of the power to the HDD 107 is provided. Even if the auxiliary power switch 135 is turned OFF, consequently, it is possible to carry out multi-screen monitoring through a live image to be the important function of the monitoring image recording apparatus using a plurality of cameras, to fulfill a camera control function and to give a notice of the abnormality of the apparatus in which a camera video signal is interrupted.

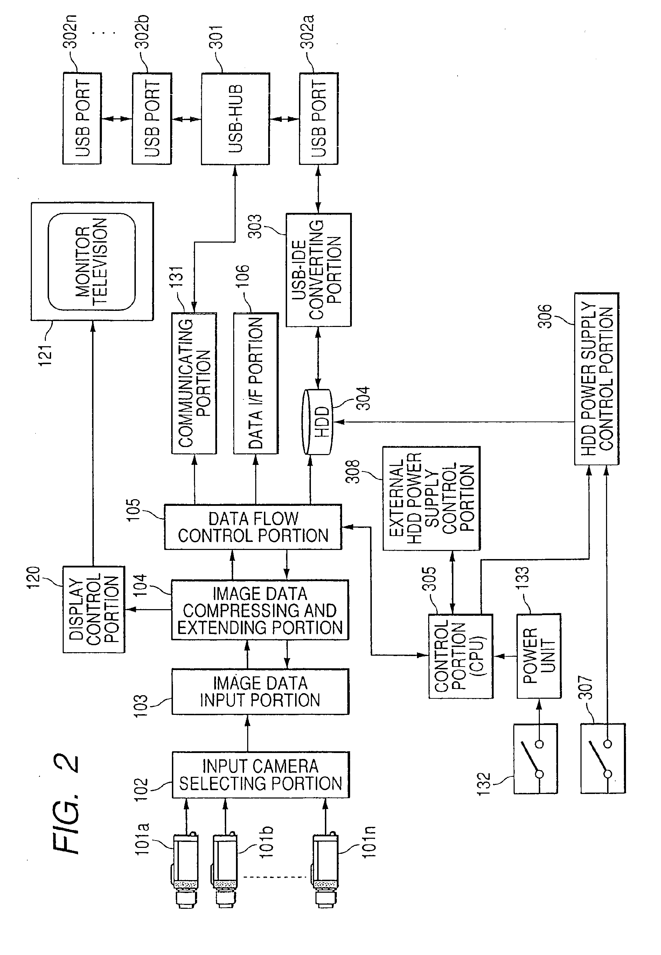

Fig. 2 is a block diagram showing a monitoring image recording apparatus according to a second embodiment of the invention.

In Fig. 2, the same components as those in the first embodiment have the same reference numerals and description thereof will be omitted.

As shown in Fig. 2, the monitoring image recording apparatus according to the second embodiment of the invention is different from the monitoring image recording apparatus according to the first embodiment in that there are provided a USB-HUB 301 for communicating with external equipment, ports 302a to 302n to which a plurality of apparatuses is connected in a longitudinal line, a USB-IDE converting portion 303 for carrying out a protocol conversion in order to use an HDD of an IDE type, an HDD 304 to be a recording medium, a control portion 305 for controlling the apparatus, an HDD power supply control portion 306, an auxiliary power switch 307 for giving the control portion a command for turning ON/OFF the power supply of the HDD 304, and an external HDD power supply control portion 308 capable of turning ON or OFF the power supply of an external HDD.

Next, the operation of the monitoring image recording apparatus will be described.

First of all, in the case in which the recording capacity of the HDD 304 in the monitoring image recording apparatus is eliminated, the control portion 305 outputs a control signal for turning ON the power supply of an external HDD (not shown) connected to the ports 302b to 302n provided on the outside of the apparatus or an HDD in another monitoring image recording apparatus, and the control signal is transmitted to the USB-HUB 301 through a communicating portion 131. Furthermore, the control signal is transmitted to a desirable external HDD through the ports 302b to 302n so that the power supply of the external HDD is turned ON. Consequently, it is possible to record, in the external HDD, monitoring image data which cannot be recorded in the HDD 304.

On the other hand, the control portion 305 turns OFF the power supply of the HDD 304 having no residual amount of recording through the HDD power supply control portion 306 in order to reduce a power consumption. The power switch 307 is of a toggle type. Every time the power switch 307 is once pressed down, ON/OFF operations are repeated and a current situation is displayed on a monitor television 121.

To the contrary, in the case in which a request for recording monitoring image data in the HDD 304 is given from another apparatus, the control portion 305 decides the use state of the HDD 304. If the use is not carried out for recording or reproduction, the recording in the HDD 304 is carried out through the USB-HUB 301, the port 302a and the USB-IDE converting portion 303.

The auxiliary power switch 307 is provided on the inside of a front panel in the apparatus, for example, and has such a structure as not to be operated easily. In the case in which the power supply of the HDD is to be urgently turned ON/OFF or the case in which the monitoring image recording apparatus is not normally operated and the power supply of the HDD cannot be turned OFF through communication, the power supply of the HDD 304 can be turned OFF. Accordingly, it is possible to avoid careless power-OFF which is caused by the erroneous operation of the auxiliary power switch 307.

As described above, according to the monitoring image recording apparatus in accordance with the second embodiment of the invention, there are provided the USB-HUB 301 for communicating with external equipment, the ports 302a to 302n to which a plurality of apparatuses is connected in a longitudinal line, and the external HDD power supply control portion 308 capable of turning ON or OFF the power supply of the external HDD. Consequently, it is possible to record, in the external HDD, monitoring image data which cannot be recorded in the HDD 304 due to the shortage of a capacity. If the HDD of another monitoring image recording apparatus which is connected to the USB ports 302b to 302n is not used, furthermore, it is also possible to use the HDD of another monitoring image recording apparatus in addition to the external HDD.

While the above description has been given to the example in which the power switch 307 is constituted by a toggle switch, it is a matter of course that the invention can be executed by means of a switch of a mechanical type. In this case, it is assumed that a state in which the power supply of the HDD 107 or the HDD 304 in the monitoring image recording apparatus is ON or OFF depends on the setting of the switch of a mechanical type.

As described above, the monitoring image recording apparatus according to the invention has such an advantage that it is possible to carry out multi-screen monitoring through a live image to be the important function of the monitoring image recording apparatus using a plurality of cameras and a camera control and to give a notice of the abnormality of the apparatus in which a camera video signal is interrupted even if the auxiliary power switch is turned OFF, and is useful for recording the monitoring image data.

## Claims

1. A monitoring image recording apparatus comprising:
an image data compressing section of compressing monitoring image data;
a recording section of recording the image data compressed by the image data compressing section; and
a control section of controlling the image data compressing section and the recording section,
wherein said control section includes a recording section power control portion for controlling a supply of a power to the recording section.

2. The monitoring image recording apparatus according to claim 1,
wherein said recording section is a hard disk drive.

3. The monitoring image recording apparatus according to claim 1,
wherein said recording section power control portion includes:
a power supply time setting unit for supplying a power to the recording section after a predetermined time since a power of the monitoring image recording apparatus is supplied.

4. The monitoring image recording apparatus according to claims 1,
wherein the recording section power control portion includes:
a power supply number counting unit for counting the number of times at which a power is supplied to the monitoring image recording apparatus.

5. The monitoring image recording apparatus according to claim 1,
wherein the recording section power control portion includes:
operation stop time calculating unit for calculating a time required to stop an operation of the recording section when a supply of a power to the recording section is stopped.

6. The monitoring image recording apparatus according to claim 1, further comprising:
an external recording section of recording the image data on an outside of the monitoring image recording apparatus,
wherein said recording section power control portion includes:
a second power supply control unit of controlling a supply of a power to the external recording section.

7. The monitoring image recording apparatus according to claim 2,
wherein said recording section power control portion includes:
a power supply time setting unit for supplying a power to the recording section after a predetermined time since a power of the monitoring image recording apparatus is supplied.

8. The monitoring image recording apparatus according to claim 2,
wherein said recording section power control portion includes:
a power supply time setting unit for supplying a power to the recording section after a predetermined time since a power of the monitoring image recording apparatus is supplied.

9. The monitoring image recording apparatus according to claim 2,
wherein said recording section power control portion includes:
operation stop time calculating unit for calculating a time required to stop an operation of the recording section when a supply of a power to the recording section is stopped.

10. The monitoring image recording apparatus according to claim 2, further comprising:
an external recording section of recording the image data on an outside of the monitoring image recording apparatus,
wherein said recording section power control portion includes:
a second power supply control unit of controlling a supply of a power to the external recording section.
